(19) Europäisches Patentamt
European Patent Office
Office européen des brevets

(11) **EP 4 021 085 B1**

(12) **EUROPEAN PATENT SPECIFICATION**

(45) Date of publication and mention
of the grant of the patent:
**19.02.2025  Bulletin 2025/08**

(21) Application number: **19943420.0**

(22) Date of filing: **23.08.2019**

(51) International Patent Classification (IPC):
**H04W 48/10** *(2009.01)*    **H04W 48/20** *(2009.01)*

(52) Cooperative Patent Classification (CPC):
**H04W 48/20; H04W 48/10**

(86) International application number:
**PCT/JP2019/033151**

(87) International publication number:
**WO 2021/038653 (04.03.2021 Gazette 2021/09)**

(54) **TERMINAL AND WIRELESS COMMUNICATION METHOD**

ENDGERÄT UND DRAHTLOSKOMMUNIKATIONSVERFAHREN

TERMINAL ET PROCÉDÉ DE COMMUNICATION SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.06.2022  Bulletin 2022/26**

(73) Proprietor: **NTT DOCOMO, INC.**
**Chiyoda-Ku**
**Tokyo 100-6150 (JP)**

(72) Inventors:
• **OKAMURA, Masaya**
**Tokyo 100-6150 (JP)**
• **MATSUMURA, Yuki**
**Tokyo 100-6150 (JP)**
• **NAGATA, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(56) References cited:
WO-A1-2018/083158      WO-A1-2018/083158
WO-A1-2019/022575      JP-A- 2016 500 490
US-A1- 2015 373 626      US-B2- 9 635 624

• ERICSSON: "Protocol structure for Multi-TRP
operation with multi-PDCCH/PDSCH", vol. RAN
WG2, no. Prague, Czech Republic; 20190826 -
20190830, 15 August 2019 (2019-08-15),
XP051767924, Retrieved from the Internet
<URL:http://www.3gpp.
org/ftp/tsg_ran/WG2_RL2/TSGR2_107/
Docs/R2-1910143.zip> [retrieved on 20190815]
• ERICSSON: "Synchronization using non- cell
-defining signals", 3GPP TSG RAN WG1 #91
R1-1720944, 18 November 2017 (2017-11-18),
pages 5, XP051370318

## Description

Technical Field

The present disclosure relates to a terminal and a radio communication method in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In the existing LTE system (for example, 3GPP Rel. 8 to Rel. 14), a user terminal (User Equipment (UE)) transmits uplink control information (UCI) by using at least one of a UL data channel (for example, Physical Uplink Shared Channel (PUSCH)) and a UL control channel (for example, Physical Uplink Control Channel (PUCCH)).

Document US 2015/373626 A1 discusses a method and apparatus for performing data transmission in a wireless communication system, wherein a wireless device checks a configuration including virtual cell groups, the virtual cell group each including two more serving cells which share an identical virtual cell identification, thus enabling seamless data transmission even if a serving cell is switched from one to another in view of a physical cell.

Document WO 2018/083158 A1 discusses a method in a network node for transmitting a cell identifier to identify a source for one or more beamed transmissions, including determining a cell identifier, CID, of the network node and a beam identifier, BID, of a beam of the network node as well as linking the CID and the BID and transmitting them to one or more user equipment.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

The mentioned problems are solved by the subject-matter of the independent claims.

Further preferred embodiments are defined in the dependent claims. Subject-matter discussed throughout the following but not falling under the scope of the claims does not form part of the invention. Technical Problem

It has been studied to provide, as well as a transmission/reception point (TRP) (a central TRP), reception points (RPs) (Rx points), which mainly receives signals, in a future radio communication system (for example, NR).

However, with regard to a communication method in an environment where a reception point is installed as well as a transmission/reception point, advances have not been made in the study thereof yet. For example, advances have not been made in a study as to how to determine a transmission destination of a signal transmitted from a terminal.

Accordingly, it is an object of the present disclosure to provide a terminal, a system and a radio communication method with which appropriate communication can be performed in an environment where a reception point is installed as well as a transmission/reception point.

Advantageous Effects of Invention

According to an aspect of the present disclosure, appropriate communication can be performed in an environment where a reception point is installed as well as a transmission/reception point.

Brief Description of Drawings

FIG. 1 is a diagram to show an example of a radio communication system including a transmission/reception point and reception points;
FIG. 2 is an example of a radio communication system in which central TRPs and reception points are installed in a first embodiment;
FIG. 3 is a diagram to show a first example of a method of grouping reception points;
FIG. 4 is a diagram to show a second example of the grouping of reception points;
FIG. 5 is a diagram to show a first configuration example of PCI elements in a second embodiment;
FIG. 6 is a diagram to show a second configuration example of the PCI elements in the second embodiment;
FIG. 7 is a diagram to show a configuration example of the PCI elements according to distances between the central TRP and the reception points;
FIG. 8 is a table to show relationships between the PCI elements and the distances between the central TRP and the reception points;

FIG. 9 is a diagram to show a configuration example of the PCI elements according to groups;

FIG. 10 is a table to show a first example of a minimum number of UE panels to be turned on;

FIG. 11 is a table to show a second example of the minimum number of UE panels to be turned on;

FIG. 12 is a table to show correspondence relationships between $\mu$, $\mu_{UL}$, SCS, and cyclic prefixes;

FIG. 13 is a diagram to show an example of a schematic configuration of a radio communication system according to one embodiment;

FIG. 14 is a diagram to show an example of a configuration of a base station according to one embodiment;

FIG. 15 is a diagram to show an example of a configuration of a user equipment according to one embodiment; and

FIG. 16 is a diagram to show an example of a hardware configuration of each of the base station and the user equipment according to one embodiment.

Description of Embodiments

(UL Coverage)

In the Rel. 15 NR, coverages (reaches) of the PUSCH, the PUCCH, the PRACH, the PDSCH, the PDCCH, and the PBCH are not equal to one another. In particular, the coverage of the PUSCH is limited in a coverage at a high frequency. In a future radio communication system (for example, Rel. 16, Rel. 17, or later versions), it is studied to improve at least one of a UL coverage and a UL throughput.

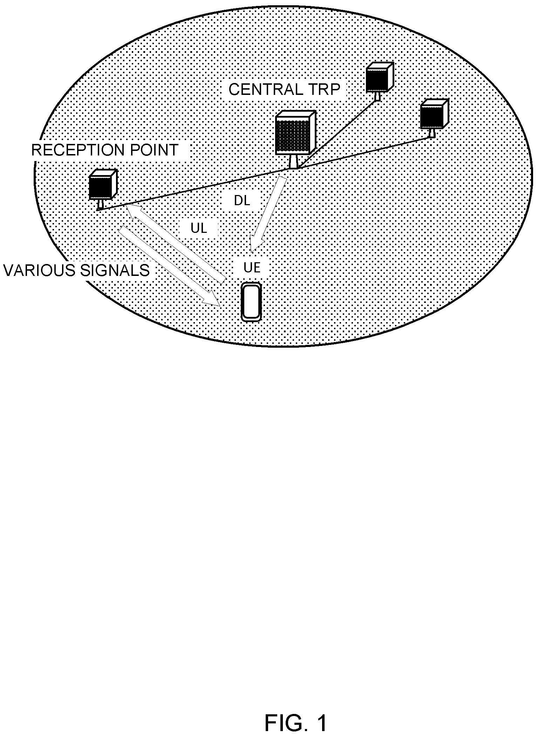

FIG. 1 is a diagram to show an example of a radio communication system including a transmission/-reception point and reception points. In order to expand the UL coverage, as shown in FIG. 1, the reception points (RPs) (Rx points) may be provided as well as the transmission/reception point (TRP) (the central TRP). The reception points may be connected to the TRP (for example, a base station or the like) or a core network by wire or wirelessly. Each of the reception points may be treated as a network or a base station. Note that the central TRP and the reception points in the present disclosure correspond to base stations 10 to be described later.

Each of the reception points does not necessarily need to include a part of constituents (a capability, a function, and the like) of the central TRP. In the reception point, at least one function among transmission of DL data, transmission of an SS/PBCH block, and DL transmission may be omitted. In the reception point, the number of at least one kind of constituents among antennas, panels, and radio frequency (RF) sections (RF chains, RF circuits) may be smaller than the number of corresponding constituents in the central TRP. Maximum transmit power of the DL may be low. A UE may receive a DL signal from the central TRP, and may transmit a UL signal to the reception point on the basis of the DL signal.

However, advances have not been made in a study as to how to configure a physical cell identity (physical cell ID (PCI)) in an environment where a reception point is installed as well as a transmission/reception point.

Accordingly, the inventors of the present invention came up with the idea that a UE receives a DL signal from at least one of a central TRP and a reception point, performs a certain assumption on the basis of a PCI that is based on the DL signal, and determines a transmission destination of a UL signal on the basis of the certain assumption. According to an aspect of the present disclosure, a UE can perform appropriate communication even in such an environment where a central TRP and a reception point are present. For example, the UE can perform an appropriate assumption for a PCI, and can determine an appropriate transmission destination of a UL signal.

Hereinafter, a detailed description will be given of embodiments according to the present disclosure with reference to the drawings. A radio communication method according to each embodiment may be used alone or may be used in combination. Note that, in the present disclosure, "A/B" may be interpreted as "at least one of A and B."

A UL signal in the present disclosure may be interpreted as an arbitrary UL channel/UL signal, and for example, may be at least one of an uplink shared channel (Physical Uplink Shared Channel (PUSCH), an uplink control channel (Physical Uplink Control Channel (PUCCH)), a random access channel (Physical Random Access Channel (PRACH)), and the like.

(Radio Communication Method)

The UE may recognize a TRP mode (may be configured with the TRP mode). A plurality of candidates for the TRP mode may include a distributed TRP mode and a local TRP mode. The distributed TRP mode, use of the reception point, transmission of a specific type of UL signal to the reception point, a multi-TRP mode, and UL dense deployment may be interchangeably interpreted. The local TRP mode, no use of the reception point, transmission of a specific type of UL signal by an existing method, transmission of a specific type of UL signal to the central TRP, a single TRP mode, a central TRP mode, and general deployment may be interchangeably interpreted.

<First Embodiment>

A UE receives a DL signal (for example, an SS block (SSB)) from at least one of a central TRP and a reception point, and performs a certain assumption for a physical cell identity (physical cell ID (PCI)) derived on the basis of the received DL signal.

In a first embodiment, the UE may perform, as such a certain assumption, not covered by the claims, an assumption that a PCI corresponding to (configured for) the central TRP and a PCI corresponding to (configured for) the reception point are common (equal) to each other. Then, the UE may receive information related to an identifier (RX point ID) different from the PCI from at least one of the transmission/reception point and the reception point, and may determine a transmission destination (for example, the central TRP or the reception point) of a UL signal on the basis of this identifier. Thus, even if the PCI corresponding to the central TRP and the PCI corresponding to the reception point are common to each other, the UE can determine the appropriate transmission destination of the UL signal.

Note that the UE may determine the transmission destination (for example, the central TRP or the reception point) of the UL signal on the basis of whether or not to receive information related to this Rx point ID.

In the first embodiment, an SS block (SSB) may be transmitted, for example, from the central TRP.

The PCI ($N_{ID}^{cell}$) assigned to the UE is represented, for example, as in Equation (1) below. $N_{ID}^{(1)}$ in Equation 1 may be a PCI element reported to the UE by a secondary synchronization signal (SSS). $N_{ID}^{(2)}$ in Equation (1) may be a PCI element reported to the UE by a primary synchronization signal (PSS). That is, on the basis of the PSS and the SSS, the UE obtains the PCI assigned to the UE. Note that the "report" in the present disclosure may be interpreted as "instruction," "configuration," "transmission," and the like.

[Math. 1]

$$N_{ID}^{cell} = 3N_{ID}^{(1)} + N_{ID}^{(2)} \qquad (1)$$

$N_{ID}^{(1)}$ is any of integers 0 to 335, for example, as shown in Equation (2). A value of $N_{ID}^{(1)}$ is not limited to the example shown in Equation (2), and may be other values. $N_{ID}^{(2)}$ is any of integers 0, 1, and 2, for example, as shown in Equation (3). Further, a value of $N_{ID}^{(2)}$ is not limited to the example shown in Equation (3), and may be other values.

[Math. 2]

$$N_{ID}^{(1)} = \{0,1,\ldots,335\} \qquad (2)$$

[Math. 3]

$$N_{ID}^{(2)} = \{0,1,2\} \qquad (3)$$

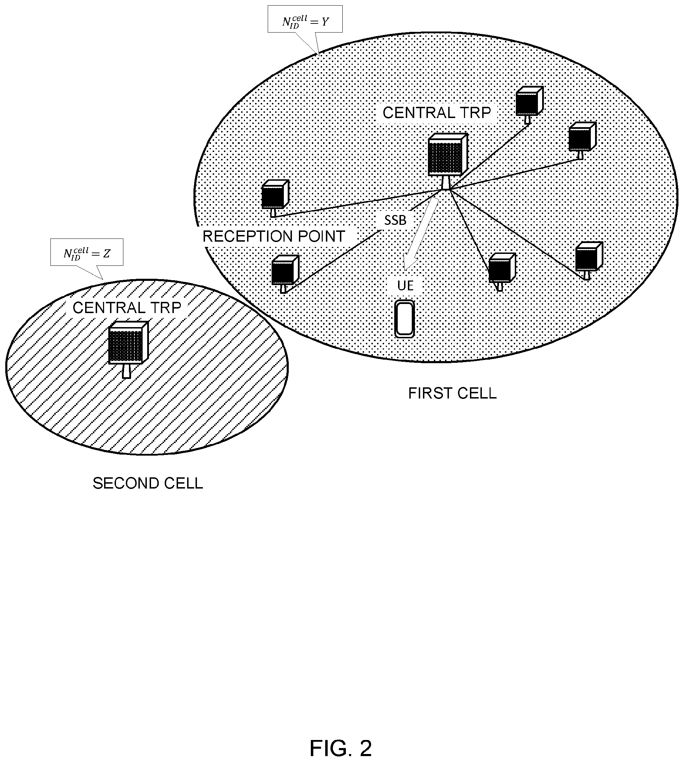

FIG. 2 is an example of a radio communication system in which central TRPs and reception points are installed in the first embodiment. In the example shown in FIG. 2, different PCIs are configured in accordance with cells to which the central TRPs and the reception points belong. That is, PCIs of the central TRP and each reception point which are present in the same cell are common to each other. In FIG. 2, the PCI ($N_{ID}^{cell}$) of a first cell is Y, and the PCI ($N_{ID}^{cell}$) of a second cell is Z.

When a plurality of the reception points are present in the same cell, PCIs configured to the plurality of respective reception points are also common. Accordingly, the UE assumes to receive transmission (report), from a NW (Network), the Rx point ID for use in identifying the central TRP and the reception points. The NW is, for example, the central TRP/reception point.

Note that the Rx point ID may be interpreted as information related to the Rx point ID. The UE determines the transmission destination of a UL signal on the basis of the transmitted Rx point ID. For example, when the Rx point ID is not transmitted from the NW, the UE may determine the central TRP which corresponds to the PCI obtained by Equation (1), as the transmission destination of the UL signal, and may transmit the UL signal to this central TRP.

In the case of having received the Rx point ID, the UE may determine the reception point which corresponds to the Rx point ID, as the transmission destination of the UL signal, and may transmit the UL signal to the determined reception point.

Note that the UE may assume that the Rx point ID is configured by at least one of upper layer signaling (for example, Radio Resource Control (RRC) signaling, MAC control element (CE), and downlink control information (DCI).

To the reception point, for example, the UE may transmit the uplink shared channel (Physical Uplink Shared Channel (PUSCH)), the uplink control channel (Physical Uplink Control Channel (PUCCH)), and the random access channel (Physical Random Access Channel (PRACH)).

A description will be given of an example of grouping (determining a group of) the reception points. Note that not only the reception points but also central TRPs may be grouped. Such a group may be referred to as a TRP group, an RP group, a TRP/RP group, and the like. For example, when a group includes only reception points, this group may be referred to as an RP group.

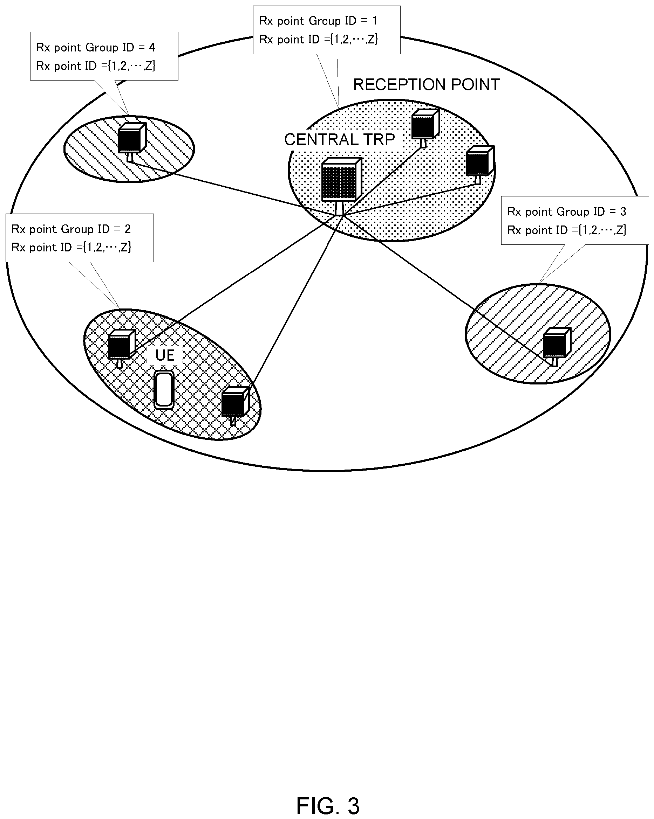

FIG. 3 is a diagram to show a first example of a method of grouping reception points. As shown in FIG. 3, the reception points may be grouped according to installation areas, and Rx point Group IDs corresponding to respective groups to which the reception points belong may be configured. Then, Rx point IDs corresponding to the respective reception points in the group may be configured.

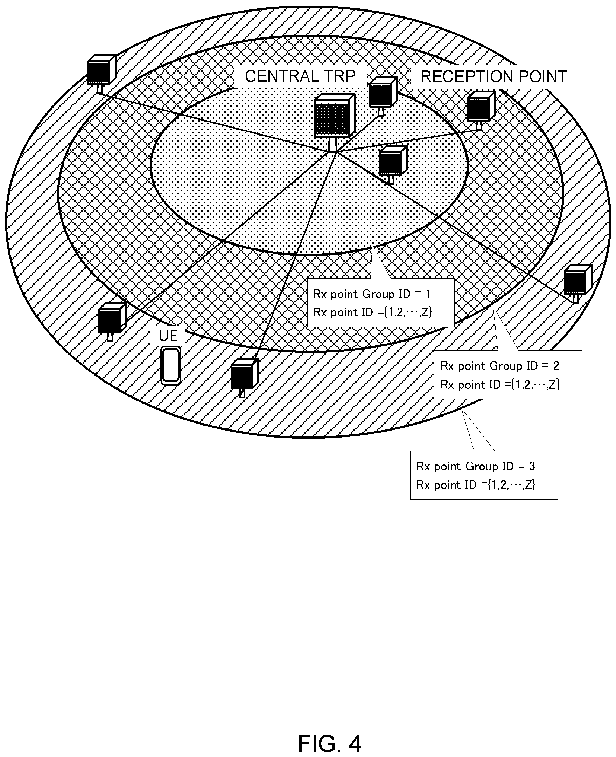

FIG. 4 is a diagram to show a second example of the method of grouping the reception points. In the second example, the UE measures a DL transmission loss (pathloss) for each of the reception points. Then, on the basis of the pathlosses thus measured, the UE groups the reception points, and configures the Rx point Group IDs. Further, the UE configures the Rx points corresponding to the respective reception points in each group.

The reception point groups may be specified in specifications. The groups of the reception points may be determined by using received power (for example, reference signal received power (RSRP)). The groups of the reception points may be determined by using received quality (for example, reference signal received quality (RSRQ)). The groups of the reception points may be determined by using, for example, a signal-to-noise and interference ratio (SINR). The groups of the reception points may be determined by the NW. The UE may receive report of the reception point group (may be subjected to configuration, activation, or indication of the reception point groups by at least one of upper layer signaling, a MAC CE, and DCI). The grouping may be performed by the central TRP/ reception points, or may be performed by the UE.

In the examples shown in FIGS. 3 and 4, the Rx point Group IDs and the Rx point IDs may be configured by the base station, or may be configured by the UE. When the Rx point Group IDs and the Rx point IDs are configured, the UE may determine the transmission destination of a UL signal on the basis of sets of the Rx point Group ID and the Rx point ID. Alternatively, the UE may determine the transmission destination of the UL signal on the basis of either the Rx point Group ID or the Rx point ID.

<Second Embodiment>

As mentioned above, the UE receives the DL signal from at least one of the central TRP and the reception point, and performs a certain assumption for the PCI derived on the basis of the received DL signal. In a second embodiment, the UE may perform, as such a certain assumption, an assumption that the PCI corresponding to (configured for) the central TRP and the PCI corresponding to (configured for) the reception point are different from each other. For example, the UE may assume that at least one of a first element (for example, $N_{ID}^{(1)}$ in Equation (1)) and a second element (for example, $N_{ID}^{(2)}$ in Equation (1)) that are based on the received DL signal is different between the central TRP and the reception point in the same cell. Note that the PCI in the second embodiment is assumed to be expressed as in Equation (1) like the first embodiment. In the second embodiment, the SSB may be transmitted, for example, from the central TRP and the reception point. In the second embodiment, a description will be given of examples described in Methods 1 to 3 below.

(Method 1)

In Method 1, not covered by the claims, the UE assumes that the PCI (for example, $N_{ID}^{cell}$ in Equation (1)) is obtained from the first element (for example, $N_{ID}^{(1)}$ in Equation (1)) and the second element (for example, $N_{ID}^{(2)}$ in Equation (1)) as in Equation (1). In this case, the UE assumes that the first element corresponding to the central TRP and the first element corresponding to the reception point are common (equal) to each other, and determines the transmission destination of a UL signal on the basis of the second element.

The UE may assume that a certain value (for example, 0) is configured as $N_{ID}^{(2)}$ corresponding to the central TRP. This certain value ($N_{ID}^{(2)}$ corresponding to the central TRP) may be configured by at least one of RRC, a MAC CE and DCI, and may be transmitted (reported) to the UE. The UE may assume that, as $N_{ID}^{(2)}$ corresponding to the reception point, a value (for example, a value other than 0) different from $N_{ID}^{(2)}$ corresponding to the central TRP is configured.

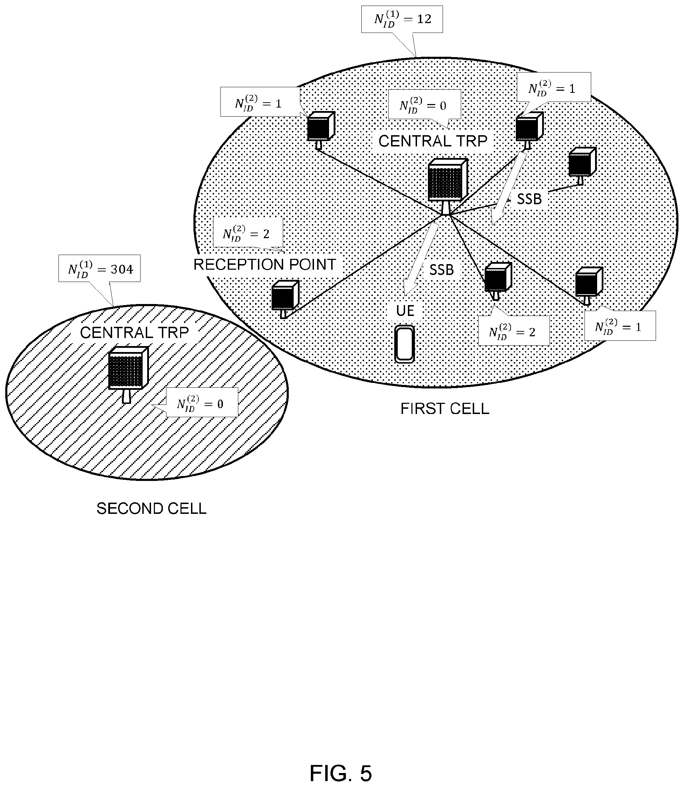

FIG. 5 is a diagram to show a first configuration example of PCI elements in the second embodiment. As shown in FIG. 5, different $N_{ID}^{(1)}$ is configured for each cell to which the same central TRP and/or reception points belong. In FIG. 5, $N_{ID}^{(1)}$ of a first cell is 12, and $N_{ID}^{(1)}$ of a second cell is 304.

In the same cell, $N_{ID}^{(1)}$ configured for the central TRP and $N_{ID}^{(1)}$s configured for the reception points are the same, but $N_{ID}^{(2)}$ configured for the central TRP and $N_{ID}^{(2)}$s configured for the reception points are different from each other. Note that $N_{ID}^{(2)}$s configured for the respective reception points in the same cell may be different from one another, or may be duplicate.

Note that the UE may assume that a different PCI is transmitted depending on the physical channel to be transmitted. For example, in the case of transmitting the PUSCH, the UE may assume, as $N_{ID}^{(2)}$, a value (for example, a natural number other than 0) corresponding to the reception point. Then, the UE may transmit the PUSCH to the reception point. For example, in the case of transmitting the PUCCH, the UE may assume, as $N_{ID}^{(2)}$, a value (for example, 0) corresponding to the central TRP. Then, the UE may transmit the PUCCH to the central TRP.

The UE may perform transmission processing (such as scrambling) for the PUSCH, the PUCCH, and the like on the basis of the PCI obtained according to these assumptions. That is, on the basis of the fact that the value of the PCI differs depending on $N_{ID}^{(2)}$, the UE performs the transmission processing for the UL signal by using the different value of the PCI, and can thereby change the transmission destination of this UL signal.

(Method 2)

In Method 2, not covered by the claims, the UE assumes that the PCI (for example, $N_{ID}^{cell}$ in Equation (1)) is obtained from the first element (for example, $N_{ID}^{(2)}$ in Equation (1)) and the second element (for example, $N_{ID}^{(1)}$ in Equation (1)) as in Equation (1). In this case, the UE assumes that the first element corresponding to the central TRP and the first element corresponding to the reception point are common (equal) to each other, and determines the transmission destination of the UL signal on the basis of the second element. That is, Method 2 corresponds to an example in which $N_{ID}^{(2)}$ in Method 1 is interpreted as $N_{ID}^{(1)}$ and $N_{ID}^{(1)}$ in Method 1 is interpreted as $N_{ID}^{(2)}$.

The UE may assume that a certain value (for example, 0) is configured as $N_{ID}^{(1)}$ corresponding to the central TRP. This certain value ($N_{ID}^{(1)}$ corresponding to the central TRP) may be configured by at least one of RRC, a MAC CE, and DCI, and may be transmitted (reported) to the UE. Further, the UE may assume that, as $N_{ID}^{(1)}$ corresponding to the reception point, a value (for example, a value other than 0) different from $N_{ID}^{(1)}$ corresponding to the central is configured.

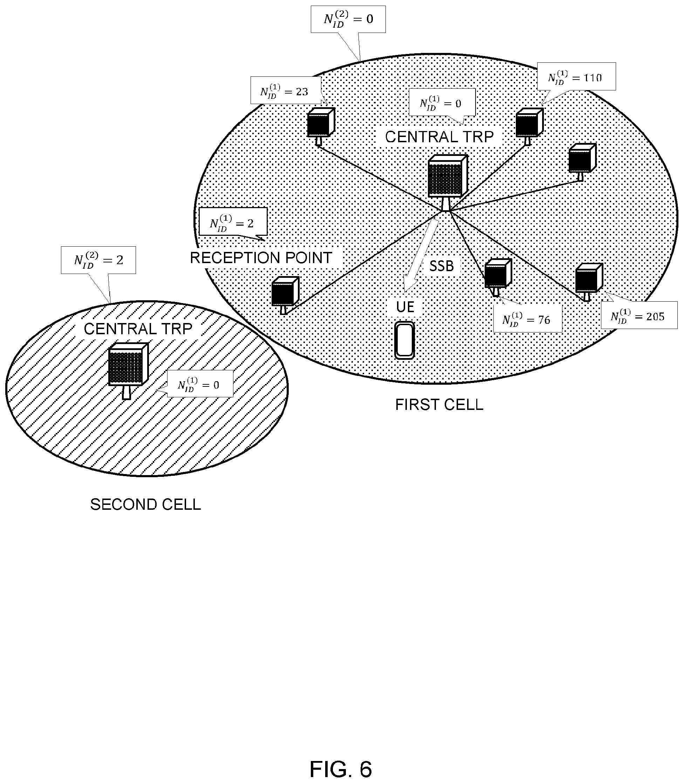

FIG. 6 is a diagram to show a second configuration example of the PCI elements in the second embodiment. As shown in FIG. 6, different $N_{ID}^{(2)}$ is configured for each cell to which the same central TRP and/or reception points belong. In FIG. 6, $N_{ID}^{(2)}$ of the first cell is 0, and $N_{ID}^{(2)}$ of the second cell is 2.

In the same cell, $N_{ID}^{(2)}$ configured for the central TRP and $N_{ID}^{(2)}$ s configured for the reception points are the same, but $N_{ID}^{(1)}$ configured for the central TRP and $N_{ID}^{(1)}$s configured for the reception points are different from each other. Note that $N_{ID}^{(1)}$ s configured for the respective reception points in the same cell may be different from one another, or may be duplicate.

Note that the UE may assume that a different PCI is transmitted depending on the physical channel to be transmitted. For example, in the case of transmitting the PUSCH, the UE may assume, as $N_{ID}^{(1)}$, a value (for example, a natural number other than 0) corresponding to the reception point. Then, the UE may transmit the PUSCH to the reception point. For example, in the case of transmitting the PUCCH, the UE may assume, as $N_{ID}^{(1)}$, a value (for example, 0) corresponding to the central TRP. Then, the UE may transmit the PUCCH to the central TRP.

The UE may perform transmission processing (such as scrambling) for the PUSCH, the PUCCH, and the like on the basis of the PCI obtained according to these assumptions. That is, on the basis of the fact that the value of the PCI differs depending on $N_{ID}^{(1)}$, the UE performs the transmission processing for the UL signal by using the different value of the PCI, and can thereby change the transmission destination of this UL signal.

(Method 3)

In Method 3, the UE may assume that the PCI corresponding to the central TRP and the PCI corresponding to the reception point are different from each other, and may determine the transmission destination of the UL signal on the basis of the PCI that is based on the DL signal (for example, the PSS and the SSS) received by the UE.

The UE may assume that the first element (for example, $N_{ID}^{(1)}$) corresponding to the central TRP and the first element corresponding to the reception point are different from each other, and may determine the transmission destination of the UL signal on the basis of first element (for example, $N_{ID}^{(1)}$) that is based on the DL signal (for example, the SSS) received by the UE. The UE may assume that the second element corresponding to the central TRP and the second element corresponding to the reception point are different from each other, and may determine the transmission destination of the UL signal on the basis of the second element that is based on the DL signal (for example, the PSS) received by the UE. On the basis of a distance between the central TRP and the reception point, the UE may assume that at least one of the PCI, the first element, and the second element is configured.

Hereinafter, a description will be given of an example in which the UE assumes that $N_{ID}^{(2)}$ corresponding to the transmission/reception point and $N_{ID}^{(2)}$ corresponding to the reception point are different from each other, and determines the transmission destination of the UL signal on the basis of $N_{ID}^{(2)}$ that is based on the DL signal (for example, the PSS) received by the UE. Note that, in the following description, $N_{ID}^{(2)}$ may be interpreted as $N_{ID}^{(1)}$ or the PCI ($N_{ID}^{cell}$).

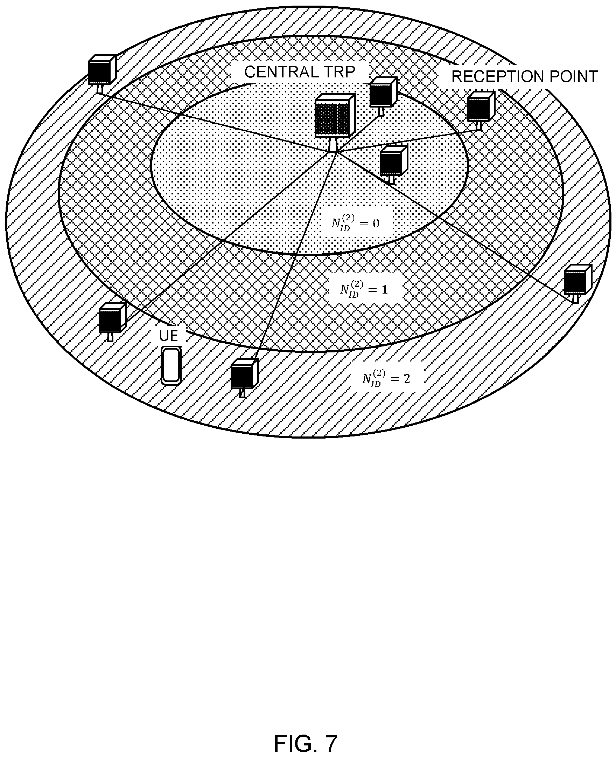

FIG. 7 is a diagram to show a configuration example of the PCI elements ($N_{ID}^{(2)}$) according to distances between the central TRP and the reception points. As shown in FIG. 7, for the central TRP, a certain value (for example, 0) may be configured as $N_{ID}^{(2)}$, and for each of the reception points, a value corresponding to the distance of the reception point to the central TRP may be configured as $N_{ID}^{(2)}$.

Moreover, when the reception point is present in a certain area in the vicinity of the center of the cell, $N_{ID}^{(2)}$ = 0 may be configured for this reception point. When the reception point is present in a certain area between the cell center and the cell edge, $N_{ID}^{(2)}$ = 1 may be configured for this reception point. When the reception point is present in a certain area in the vicinity of the cell edge, $N_{ID}^{(2)}$ = 2 may be configured for this reception point.

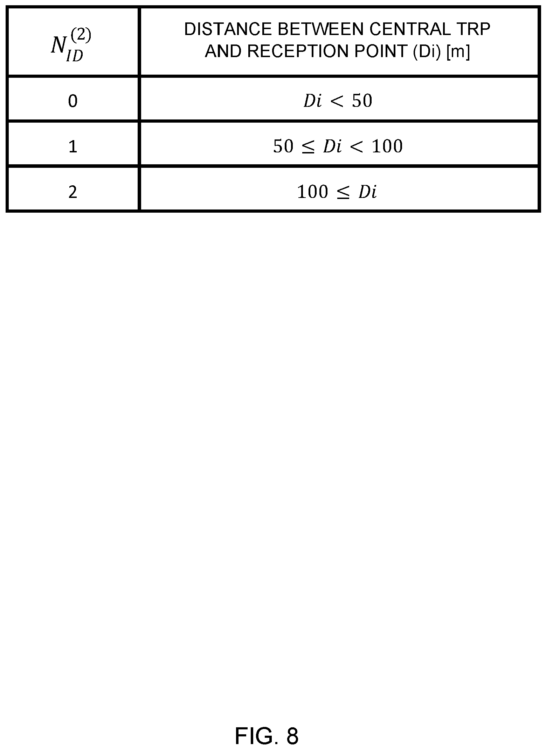

For example, for $N_{ID}^{(2)}$ of each of the reception points, a value corresponding to a comparison result between the distance of the reception point to the transmission/reception point and a threshold may be configured. FIG. 8 is a table to show relationships between the PCI elements ($N_{ID}^{(2)}$) and the distances between the central TRP and the reception points. For example, $N_{ID}^{(2)}$s of the reception points may be configured on the basis of a table shown in FIG. 8.

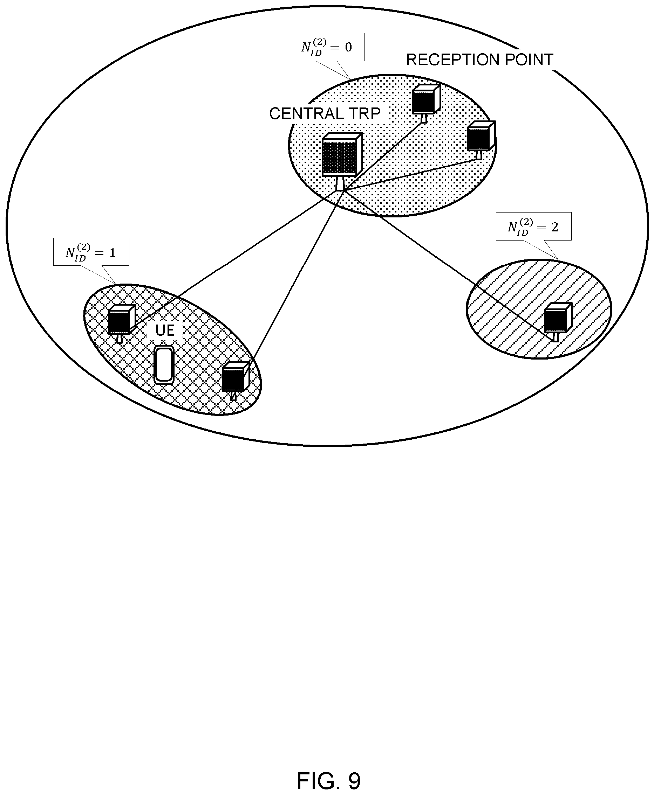

The UE may assume that $N_{ID}^{(2)}$s corresponding to the respective groups to which the central TRP and the reception points belong are configured for the central TRP and the reception points. FIG. 9 is a diagram to show a configuration example of the PCI elements ($N_{ID}^{(2)}$) according to groups. As a grouping method, for example, grouping corresponding to installation areas is used. That is, the central TRP/reception points which are arranged at positions close to one another are configured in the same group, and same $N_{ID}^{(2)}$ is configured for the central TRP/reception points.

The UE may determine the number of panels to be turned on, on the basis of $N_{ID}^{(2)}$ that is based on the received DL signal. For example, the UE may assume that $N_{ID}^{(2)}$ is configured on the basis of the distance between the central TRP and the reception point, and may determine the number of panels to be turned on, on the basis of $N_{ID}^{(2)}$ derived on the basis of the received DL signal.

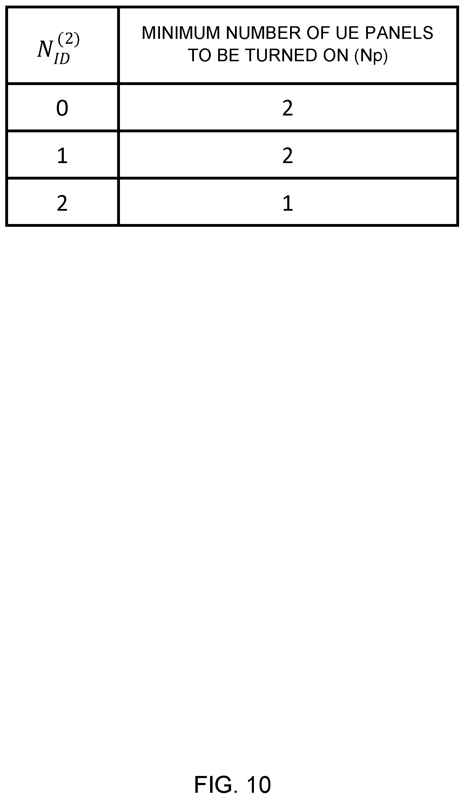

FIG. 10 is a table to show a first example of a minimum number of UE panels to be turned on. In the example shown in FIG. 10, the minimum number of UE panels to be turned on is increased as the value of $N_{ID}^{(2)}$ is smaller (that is, as the distance between the central TRP and the reception point is shorter). When the distance between the central TRP and the reception point is short, a frequency of switching to the optimum panel is increased. Therefore, a larger number of panels is turned on as the distance between the central TRP and the reception point is shorter, whereby it can be made easy to switch to the optimum panel. In such a case, as that shown in FIG. 7, where $N_{ID}^{(2)}$ is determined according to the distance between the central TRP and the reception point, the determination of the number of panels to be turned on, which is as shown in FIG. 10, may be used.

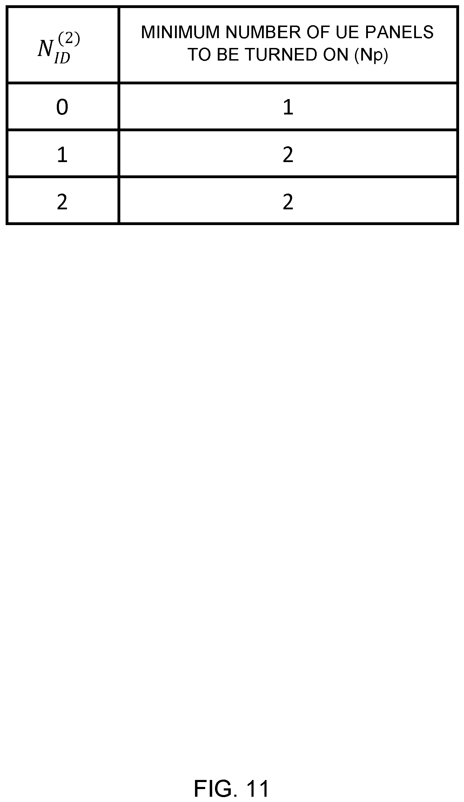

FIG. 11 is a table to show a second example of the minimum number of the UE panels to be turned on. In the example shown in FIG. 11, the minimum number of UE panels to be turned on is increased as the value of $N_{ID}^{(2)}$ is larger (that is, as the distance between the central TRP and the reception point is larger). When the distance between the central TRP and the reception point is long, a combined gain of received signals is required. Therefore, a larger number of the panels are turned on as the distance between the central TRP and the reception point is longer, whereby a request for the combined gain can be dealt with. In such a case, as that shown in FIG. 7, where $N_{ID}^{(2)}$ is determined according to the distance between the central TRP and the reception point, the determination of the number of panels to be turned on, which is as shown in FIG. 10, may be used.

Note that the UE may assume that $N_{ID}^{(2)}$ s are configured on the basis of the grouping as shown in FIG. 9, and may determine the number of panels to be turned on, on the basis of $N_{ID}^{(2)}$ that is based on the received DL signal.

Note that, in the second embodiment, the description is given of the example in which the PCI includes two elements ($N_{ID}^{(1)}$, $N_{ID}^{(2)}$), but the PCI may include three or more elements. In that case, the UE may assume that a specific element corresponding to the central TRP and a specific element corresponding to the reception point are common to each other, and may determine the transmission destination of a UL signal on the basis of an element other than this specific element.

According to the embodiments described above, the UE receives a DL signal from at least one of the central TRP and the reception points, performs a certain assumption on the basis of the PCI that is based on the DL signal, and determines the transmission destination of a UL signal on the basis of the certain assumption. Thus, the UE can perform appropriate communication even in an environment where the central TRP and the reception point are present. For example, the UE can perform an appropriate assumption for the PCI, and can determine an appropriate transmission destination of the UL signal.

Note that, without performing the certain assumption, the UE may determine the transmission destination of the UL signal on the basis of the PCI, the Rx point ID, the PCI element (for example, the above-mentioned first or second element), and the like. The determination of the transmission destination of the UL signal on the basis of the PCI, the Rx point ID, the PCI elements, and the like in the present disclosure may stand for that the transmission processing for the UL signal is performed by using the PCI, the Rx point ID, the PCI element, and the like, which vary depending on the transmission destination.

<Others>

(1) The UE may assume that the PDCCH is transmitted from the reception point. The distance from the reception point to the UE is highly likely to be shorter than the distance from the central TRP to the UE, and accordingly, the transmission of the PDCCH from the reception point can reduce a probability of a failure to decode the PDCCH.

(2) The UE may assume that the SSB is transmitted from the reception point. The PCI is assigned for each reception point as described in the above-mentioned second embodiment, the UE can determine a reception point of a connection destination from the SSS and the PSS, which are included in the SSB. Further, the SSB corresponding to the reception point may be configured as a pathloss reference reference signal (pathloss reference RS). Thus, the UE can assume the pathloss between the reception point and the UE.

(3) The UE may assume that Message 2 (a random access response on the PDSCH) is transmitted from the reception point. Further, the UE may assume that Message 4 (a collision resolution message) is transmitted on the PDSCH from the reception point. Further, the UE may assume that bot of Message 2 and Message 4 are transmitted on the PDSCH from the reception point. The distance from the reception point to the UE is very likely to be shorter than the distance from the central TRP to the UE. Accordingly, a probability that the UE can receive the random access response or the collision resolution message is increased, and a possibility to retransmit the same is reduced. Therefore, a time until an initial access is established can be reduced.

(4) The UE may assume that a channel other than the PDSCH is transmitted from the reception point. Thus, the PDSCH is only one coverage factor of the UE, which depends on the central TRP, and therefore, the coverage of the UL can be expanded without depending on other DL physical channels.

The UE may apply the above (1) to (4) in appropriate combination.

The UE may assume that a subcarrier spacing (SCS) different from a DL SCS is configured for the UL. Further, an index $\mu$ corresponding to the SCS of the DL and an index $\mu_{UL}$ corresponding to the SCS of the UL may be configured independently of each other.

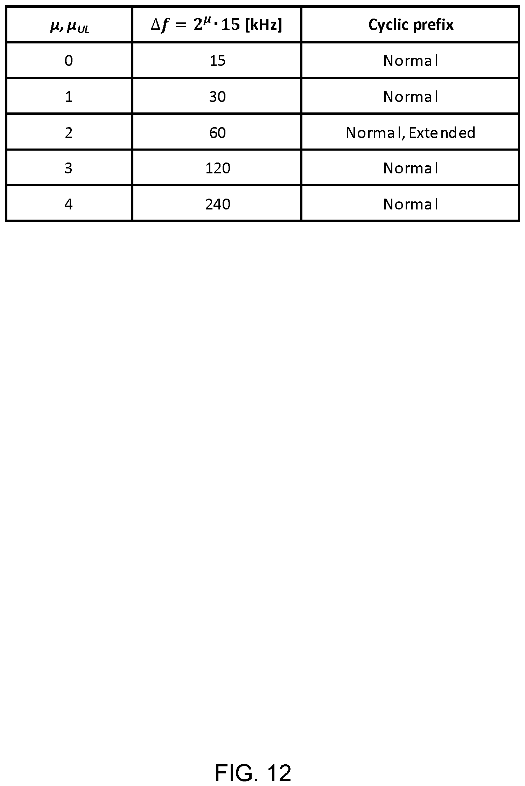

FIG. 12 is a table to show correspondence relationships between $\mu$, $\mu_{UL}$, the SCS, and cyclic prefixes. The SCS corresponds to $\Delta f$ in FIG. 12. The UE may assume that, for example, any $\mu_{UL}$ shown in FIG. 12 is configured.

$\mu_{UL}$ may be reported to the UE by an upper layer parameter, a MAC-CE, or DCI. When $\mu_{UL}$ is configured, the UE may apply $\mu_{UL}$ to a physical channel/signal to be transmitted to the reception point (for example, the physical channel/signal to be transmitted on the basis of the PCI corresponding to the reception point.

The physical channel/signal to be transmitted to the reception point may be reported to the UE by an upper layer parameter, a MAC-CE, or DCI. When none of the physical channel/signal to be transmitted to the reception point is configured, or when $\mu_{UL}$ is not configured, the UE may apply $\mu$ to an arbitrary physical channel/signal to be transmitted to the reception point. When none of the physical channel/signal to be transmitted to the reception point is configured, and when $\mu_{UL}$ is configured, the UE may apply $\mu_{UL}$ to an arbitrary physical channel/signal to be transmitted to the reception point. When $\mu_{UL}$ is configured, the UE may apply $\mu$ to a physical channel/signal that is not configured as the physical channel/signal to be transmitted to the reception point, and may apply $\mu_{UL}$ to the physical channel/signal to be transmitted to the reception point.

The reception point (Rx point) in the present disclosure may be interpreted as an RP, a Reception Point, a distributed TRP, an additional TRP, a restrictive TRP, a reception cell (Rx cell), a reception component carrier (Rx CC), or a reception BWP (reception Bandwidth part).

The central TRP in the present disclosure may be interpreted as a TRP, a transmission/reception point (Transmission and reception point), a main TRP, a transmission/reception cell (Tx and Rx cell), a transmission/-reception component carrier (Tx and Rx CC), or a transmission/reception BWP (Tx and Rx BWP).

The TRP in the present disclosure may be interpreted as an RS group, an antenna port group, or a control resource set (CORSET) group.

The distributed TRP mode in the present disclosure may be interpreted as a separated location mode of a transmission/reception point (Separated location mode of Tx/Rx point), a distributed transmission/reception point mode (Distributed Tx/Rx point mode), a separated TRP mode, a TRP type 1, or a TRP type A. "1" of the TRP type 1 may be interpreted as other numeric values. "A" of the TRP type A may be interpreted with other characters.

The reception point (rxPoint) of the upper layer parameter in the present disclosure may be interpreted as a reception point group (rxPointGroup), a reception point (receptionPoint), a receptionPointGroup), or an Rx point ID.

The pathloss reference RS setting of the upper layer parameter in the present disclosure may be replaced by a pathloss reference RS configuration (pathlossReferenceRsConfig), or a pathloss reference RS mode (pathlossReferenceRsMode).

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

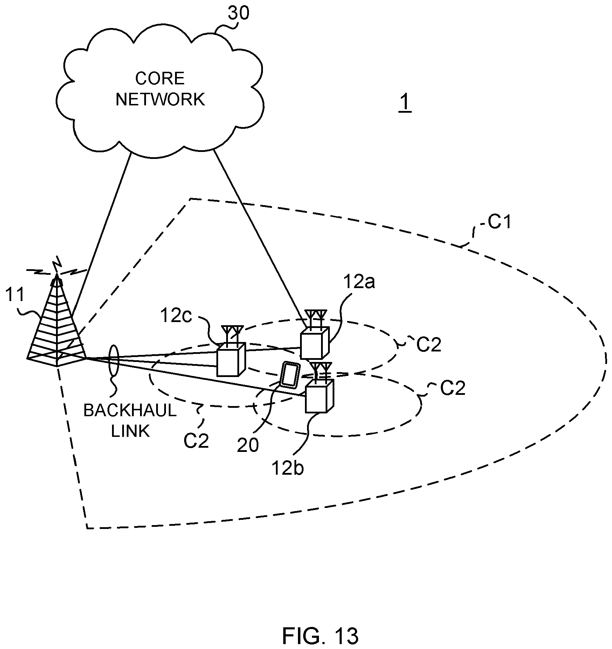

FIG. 13 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

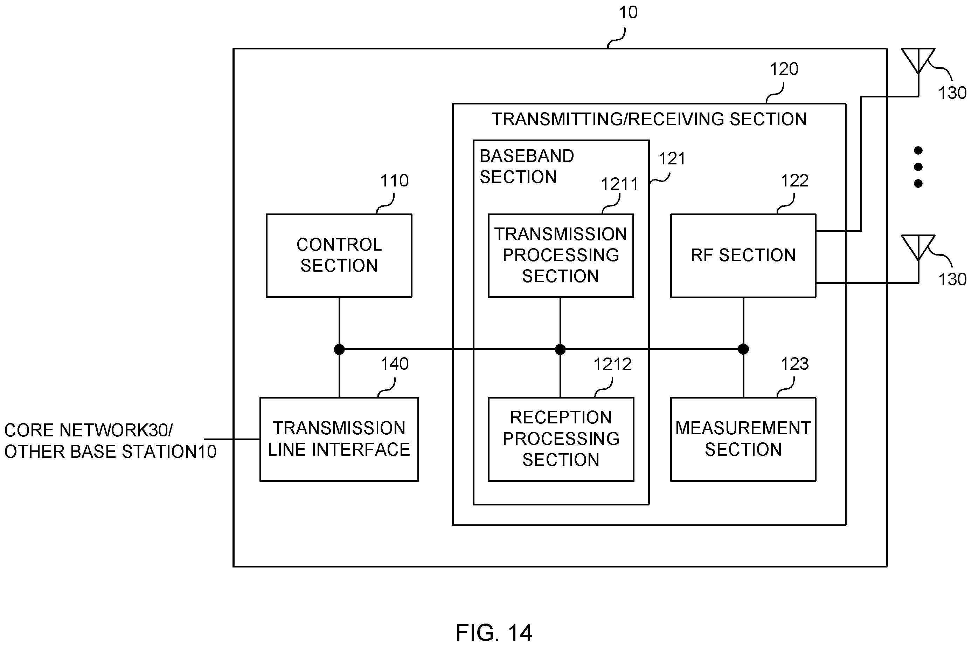

FIG. 14 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that a transmission/reception section 120 of at least one of the transmission/reception point and the reception point may transmit a DL signal related to the PCI to the UE. The transmission/reception section 120 may transmit, to the UE, information related to an identifier different from the PCI.

(User Terminal)

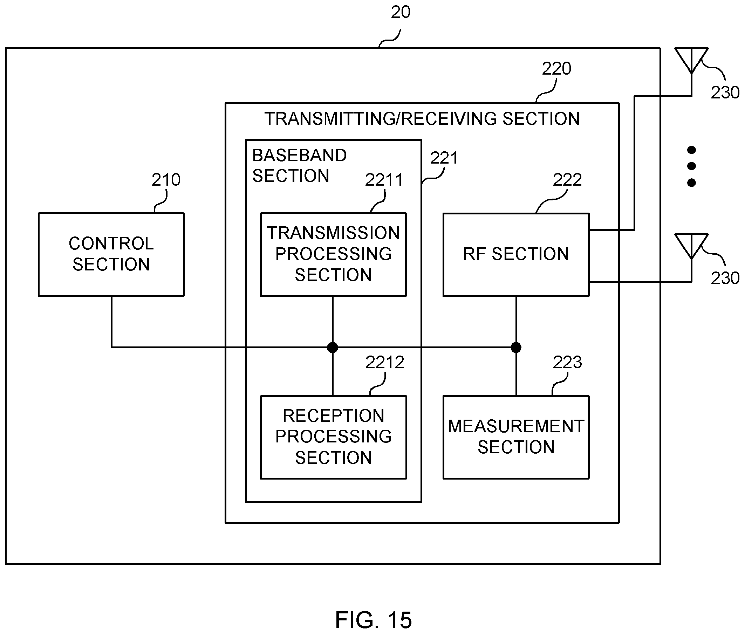

FIG. 15 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmission/reception section 220 may receive the DL signal from at least one of the transmission/reception point and the reception point. The transmission/reception section 220 may receive information related to an identifier (for example, the Rx point ID) different from the PCI.

The control section 210 may perform a certain assumption for the PCI that is based on the DL signal received by the transmission/reception section 220, and may determine the transmission destination of the UL signal on the basis of the certain assumption. The control section 210 may perform, as the certain assumption, an assumption that the PCI corresponding to the transmission/reception point and the PCI corresponding to the reception point are common to each other, and may determine the transmission destination on the basis of the identifier received by the transmission/reception section 220 and different from the PCI. When the PCI is obtained from the first and second elements which are based on the received DL signal, the control section 210 may perform, as the certain assumption, an assumption that the first element corresponding to the transmission/-reception point and the first element corresponding to the reception point are common to each other, and may determine the transmission destination on the basis of the second element. The control section 210 may perform, as the certain assumption, an assumption that the PCI corresponding to the transmission/reception point and the PCI corresponding to the reception point are different from each other, and may determine the transmission destination on the basis of the PCI that is based on the DL signal received by the transmission/reception section 220. The control section 210 may perform, as the certain assumption, an assumption that the PCI is configured on the basis of the distance between the transmission/reception point and the reception point, and may determine the number of panels to be turned on on the basis of the PCI that is based on the received DL signal.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

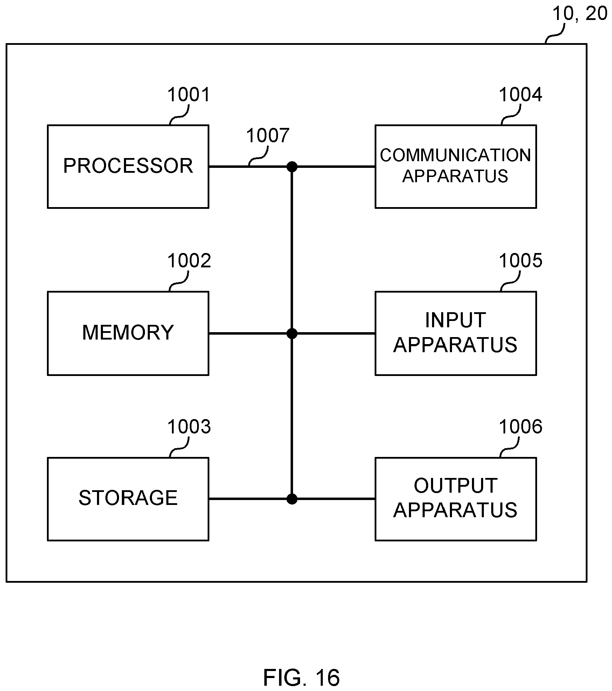

For example, a base station, a user terminal, and so on according to one embodiment of the present disclosure may function as a computer that executes the processes of the radio communication method of the present disclosure. FIG. 16 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell, a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the scope of the invention defined by the recitations of claims. Consequently, the description of the present disclosure is provided only for the purpose of explaining examples, and should by no means be construed to limit the invention according to the present disclosure in any way.

**Claims**

1.　A terminal (20) comprising:

a reception section (220) configured to receive a Downlink, DL, signal from at least one of a transmission/reception point and a reception point; and
a control section (210) configured to perform a certain assumption for a Physical Cell Identifier, PCI, that is based on the DL signal, and configured to determine a transmission destination of an Uplink, UL, signal, based on the certain assumption, wherein
the control section (210) is configured to perform, as the certain assumption, an assumption that the PCI corresponding to the transmission/-reception point and the PCI corresponding to the reception point are different from each other, and is configured to determine the transmission destination of the UL signal, based on the PCI that is based on the DL signal,
**characterised in that**
the control section (210) is further configured to perform, as the certain assumption, an assumption that the PCI is configured based on a distance between the transmission/reception point and the reception point, and is configured to determine, based on the PCI that is based on the DL signal, the number of terminal panels to be turned on.

2.　A radio communication method performed by a terminal, the radio communication method comprising:

receiving a Downlink, DL, signal from at least one of a transmission/reception point and a reception point; and
performing a certain assumption for a Physical Cell Identifier, PCI, that is based on the DL signal, and determining a transmission destination of an Uplink, UL, signal, based on the certain assumption,
performing, as the certain assumption, an assumption that the PCI corresponding to the transmission/reception point and the PCI corresponding to the reception point are different from each other, and determining the transmission destination of the UL signal, based on the PCI that is based on the DL signal,
**characterised in that** the method comprises further
performing, as the certain assumption, an assumption that the PCI is configured based on a distance between the transmission/reception point and the reception point, and determining, based on the PCI that is based on the DL signal, the number of terminal panels to be turned on.

3.　A system comprising a terminal (20) according to claim 1 and a base station (10), wherein the base station (10) comprises:
a control section configured to control transmission of the DL signal.

**Patentansprüche**

1.　Endgerät (20), das umfasst:

einen Empfangsabschnitt (220), der so konfiguriert ist, dass er ein Abwärtsverbindungs-, DL, Signal von mindestens einem von einem Sende-/Empfangspunkt und einem Empfangspunkt empfängt; und
einen Steuerabschnitt (210), der so konfiguriert ist, dass er eine bestimmte Annahme für eine physikalische Zellenkennung, PCI, durchführt, die auf dem DL-Signal basiert, und so konfiguriert ist, dass er ein Sendeziel eines Aufwärtsverbindungs-, UL-, Signals basierend auf der bestimmten Annahme bestimmt, wobei
der Steuerabschnitt (210) so konfiguriert ist, dass er als die bestimmte Annahme eine Annahme durchführt, dass die PCI, die dem Sende-/Empfangspunkt entspricht, und die PCI, die dem Empfangspunkt entspricht, voneinander verschieden sind, und so konfiguriert ist, dass er das Sendeziel des UL-Signals basierend auf der PCI bestimmt, die auf dem DL-Signal basiert, **dadurch gekennzeichnet, dass**
der Steuerabschnitt (210) weiter so konfiguriert ist, dass er als die bestimmte Annahme eine Annahme durchführt, dass die PCI basierend auf einer Entfernung zwischen dem Sende-/Empfangspunkt und dem Empfangspunkt konfiguriert ist, und so konfiguriert ist, dass er basierend auf der PCI, die auf dem DL-Signal basiert, die Anzahl der einzuschaltenden Endgeräte-Panels bestimmt.

2.　Funkkommunikationsverfahren, das von einem Endgerät durchgeführt wird,
wobei das Funkkommunikationsverfahren umfasst:

Empfangen eines Abwärtsverbindungs-, DL-, Signals von mindestens einem von einem Sende-/Empfangspunkt und einem Empfangspunkt; und

Durchführen einer bestimmten Annahme für eine physikalische Zellenkennung, PCI, die auf dem DL-Signal basiert, und Bestimmen eines Sendeziels eines Aufwärtsverbindungs-, UL-, Signals, basierend auf der bestimmten Annahme,

Durchführen, als die bestimmte Annahme, einer Annahme, dass die PCI, die dem Sende-/Empfangspunkt entspricht, und die PCI, die dem Empfangspunkt entspricht, voneinander verschieden sind, und Bestimmen des Sendeziels des UL-Signals, basierend auf der PCI, die auf dem DL-Signal basiert, **dadurch gekennzeichnet, dass** das Verfahren weiter umfasst Durchführen, als die bestimmte Annahme, einer Annahme, dass die PCI basierend auf einer Entfernung zwischen dem Sende-/Empfangspunkt und dem Empfangspunkt konfiguriert ist, und Bestimmen, basierend auf der PCI, die auf dem DL-Signal basiert, der Anzahl der einzuschaltenden Endgeräte-Panels.

3. System, das ein Endgerät (20) nach Anspruch 1 und eine Basisstation (10) umfasst, wobei die Basisstation (10) umfasst:
einen Steuerabschnitt, der so konfiguriert ist, dass er die Übertragung des DL-Signals steuert.

**Revendications**

1. Terminal (20) comprenant :

une section de réception (220) configurée pour recevoir un signal de liaison descendante, DL, à partir d'au moins un point de transmission/réception et un point de réception ; et
une section de commande (210) configurée pour mettre en œuvre une certaine hypothèse pour un identificateur de cellule physique, PCI, qui est basé sur le signal DL, et configurée pour déterminer une destination de transmission d'un signal de liaison montante, UL, sur la base de la certaine hypothèse, dans lequel
la section de commande (210) est configurée pour mettre en œuvre, en tant que certaine hypothèse, une hypothèse selon laquelle le PCI correspondant au point de transmission/réception et le PCI correspondant au point de réception sont différents l'un de l'autre, et est configurée pour déterminer la destination de transmission du signal UL, sur la base du PCI qui est basé sur le signal DL, **caractérisé en ce que**

la section de commande (210) est en outre configurée pour mettre en œuvre, en tant que certaine hypothèse, une hypothèse selon laquelle le PCI est configuré sur la base d'une distance entre le point de transmission/réception et le point de réception, et est configurée pour déterminer, sur la base du PCI qui est basé sur le signal DL, le nombre de panneaux de terminaux à allumer.

2. Procédé de communication radio mis en œuvre par un terminal, le procédé de communication radio comprenant :

la réception d'un signal de liaison descendante, DL, à partir d'au moins un point de transmission/réception et un point de réception ; et
la mise en œuvre d'une certaine hypothèse pour un identificateur de cellule physique, PCI, qui est basé sur le signal DL, et la détermination d'une destination de transmission d'un signal de liaison montante, UL, sur la base de la certaine hypothèse,
la mise en œuvre, en tant que certaine hypothèse, d'une hypothèse selon laquelle le PCI correspondant au point de transmission/réception et le PCI correspondant au point de réception sont différents l'un de l'autre, et la détermination de la destination de transmission du signal UL, sur la base du PCI qui est basé sur le signal DL, **caractérisé en ce que** le procédé comprend en outre
la mise en œuvre, en tant que certaine hypothèse, d'une hypothèse selon laquelle le PCI est configuré sur la base d'une distance entre le point de transmission/réception et le point de réception, et la détermination, sur la base du PCI qui est basé sur le signal DL, du nombre de panneaux de terminaux à allumer.

3. Système comprenant un terminal (20) selon la revendication 1 et une station de base (10), dans lequel la station de base (10) comprend :
une section de commande configurée pour commander la transmission du signal DL.

FIG. 1

$N_{ID}^{cell} = Y$

CENTRAL TRP

$N_{ID}^{cell} = Z$

CENTRAL TRP

RECEPTION POINT

SSB

UE

FIRST CELL

SECOND CELL

FIG. 2

Rx point Group ID = 1
Rx point ID ={1,2,···,Z}

Rx point Group ID = 4
Rx point ID ={1,2,···,Z}

RECEPTION POINT

CENTRAL TRP

Rx point Group ID = 2
Rx point ID ={1,2,···,Z}

Rx point Group ID = 3
Rx point ID ={1,2,···,Z}

UE

FIG. 3

CENTRAL TRP   RECEPTION POINT

Rx point Group ID = 1
Rx point ID =[1,2,···,Z]

Rx point Group ID = 2
Rx point ID =[1,2,···,Z]

Rx point Group ID = 3
Rx point ID =[1,2,···,Z]

UE

FIG. 4

FIG. 5

$$N_{ID}^{(2)} = 0$$

$$N_{ID}^{(1)} = 23$$

$$N_{ID}^{(1)} = 0$$

CENTRAL TRP

$$N_{ID}^{(1)} = 110$$

$$N_{ID}^{(1)} = 2$$

RECEPTION POINT

$$N_{ID}^{(2)} = 2$$

CENTRAL TRP

$$N_{ID}^{(1)} = 0$$

SSB

UE

$$N_{ID}^{(1)} = 76$$

$$N_{ID}^{(1)} = 205$$

FIRST CELL

SECOND CELL

FIG. 6

CENTRAL TRP

RECEPTION POINT

$N_{ID}^{(2)} = 0$

$N_{ID}^{(2)} = 1$

UE

$N_{ID}^{(2)} = 2$

FIG. 7

| $N_{ID}^{(2)}$ | DISTANCE BETWEEN CENTRAL TRP AND RECEPTION POINT (Di) [m] |
|---|---|
| 0 | $Di < 50$ |
| 1 | $50 \leq Di < 100$ |
| 2 | $100 \leq Di$ |

FIG. 8

$N_{ID}^{(2)} = 0$

RECEPTION POINT

CENTRAL TRP

$N_{ID}^{(2)} = 1$

$N_{ID}^{(2)} = 2$

UE

FIG. 9

| $N_{ID}^{(2)}$ | MINIMUM NUMBER OF UE PANELS TO BE TURNED ON (Np) |
|---|---|
| 0 | 2 |
| 1 | 2 |
| 2 | 1 |

FIG. 10

| $N_{ID}^{(2)}$ | MINIMUM NUMBER OF UE PANELS TO BE TURNED ON (Np) |
|---|---|
| 0 | 1 |
| 1 | 2 |
| 2 | 2 |

FIG. 11

| $\mu, \mu_{UL}$ | $\Delta f = 2^{\mu} \cdot 15$ [kHz] | Cyclic prefix |
|:---:|:---:|:---:|
| 0 | 15 | Normal |
| 1 | 30 | Normal |
| 2 | 60 | Normal, Extended |
| 3 | 120 | Normal |
| 4 | 240 | Normal |

FIG. 12

FIG. 13

FIG. 14

EP 4 021 085 B1

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015373626 A1

- WO 2018083158 A1

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010